# EUROPEAN PATENT SPECIFICATION

(11) **EP 1 777 122 B1**
(45) Date of publication and mention of the grant of the patent: **02.12.2009**
(21) Application number: 06020390.8
(22) Date of filing: 28.09.2006
(51) Int. Cl.: B60R 21/217, B60R 21/00

(54) **Airbag system**
Airbagsystem
Système de coussin gonflable

(30) Priority: 25.10.2005 JP 2005309235; 24.10.2005 JP 2005308207; 02.11.2005 JP 2005319876
(43) Date of publication of application: 25.04.2007
(73) Proprietor: TAKATA CORPORATION, Minato-ku, Tokyo 106-8510 (JP)
(72) Inventor: Kashiwagi, Daisuke c/o Takata Corporation, Tokyo 106-8510 (JP)
(74) Representative: Banzer, Hans-Jörg

(56) References cited:
- EP-A1- 1 514 742

## Description

The present invention relates to an airbag system mounted to a vehicle such as a car.

### [Background Art]

Various airbag systems are generally used for restraining occupants' bodies in a car collision, such as a driver airbag system that inflates and deploys from the rotation center of the steering wheel toward a driver in a driver seat and a passenger airbag that inflates and deploys from an instrument panel toward a passenger seat.

One of the airbag systems is a leg airbag system for preventing occupants' legs from colliding with an interior panel and such in front of the seat in a collision and for restraining the vicinity of the knees to prevent the movement of the lower half of the occupants' bodies toward the front of the vehicle.

The leg airbag system generally includes an airbag disposed inside the interior panel (in the space on the back of the interior panel), a gas generator for inflating the airbag, and a lid that covers the airbag normally (when the high-speed mobile unit such as a car is not in a collision).

Such a leg airbag system is generally constructed such that the airbag is disposed in a folded state inside the interior panel, and the lid is mounted so as to cover the folded airbag. When a car and so on collides head-on, the gas generator generates a jet of gas. The gas is supplied to the airbag to open the lid with the inflation of the airbag. This permits the airbag to inflate to the exterior of the interior panel to deploy between the interior panel and the lower legs of the occupant, thereby preventing the occupant's lower legs from striking against the interior panel (hereinafter, this type of airbag that inflates forward of occupant's legs is referred to as a knee airbag).

An example of the leg airbag system is one that includes a knee airbag and a gas generator most of which is disposed in the knee airbag and the end of which projects to the exterior through a slit-like insertion opening of the knee airbag (refer to Japanese Unexamined Patent Application Publication No. 2005-82025, for example). In this case, an ignition control connector connects to the externally projecting end of the gas generator.

EP 1 514 742 (and US 2005/0110244 as well) discloses an airbag and an airbag assembly according to the preamble of claim 1. A rear panel and a support sheet have insertion holes arranged separately. The space from the insertion hole of the rear panel to the insertion hole of the support sheet serves as a gas-generator insertion space. The rear panel and the support sheet are joined together. Thus, the gas-generator insertion space is formed into a tunnel shape.

### [Problems to be Solved by the Invention]

The prior art discloses the basic structure of a leg airbag system including a knee airbag and a gas generator passed through the insertion opening of the knee airbag.

The knee airbag requires improved airtightness and deployment performance to optimize the leg airbag system.

Accordingly, it is an object of the present invention to provide an airbag system in which the deployment performance of an airbag can be improved by improvement in airtightness.

### [Means for Solving the Problems]

According to the present invention, this object is achieved by an airbag system as defined in claim 1 and a knee airbag system as defined in claim 5. The dependent claims define preferred and advantageous embodiments of the invention.

In order to achieve the above object, according to a first aspect of the invention, there is provided an airbag system including an airbag for restraining an occupant and a gas generator that generates a jet of gas to inflate the airbag. The area of an insertion opening of the airbag for the gas generator to pass through is smaller than the cross section of the gas generator.

According to the first aspect to the invention, the gas generator is passed through the insertion opening of the airbag with the gas generator housed in the airbag, and the end of the gas generator connecting to the gas-generator ignition control cable is exposed to the exterior of the airbag. The area of the generator insertion opening is set smaller than the cross section of the gas generator. Thus, the gas generator is tightly fitted in the airbag to prevent the formation of clearance between the inner rim of the insertion opening and the outer periphery of the gas generator. Accordingly, the airtightness of the airbag can be improved. This prevents gas leakage through the clearance during inflation and deployment, and thereby improving the deployment performance of the airbag. Furthermore, since the airbag can be deployed by the relatively low-output gas generator, the gas generator can be made compact.

According to a preferred embodiment, the gas-generator insertion opening of the first invention is circular in shape.

According to this preferred embodiment, the end of the gas generator connecting to the gas-generator ignition control cable is passed through the insertion opening of the airbag with the gas generator housed in the airbag, and the end is exposed to the exterior of the airbag. According to this, the insertion opening for the end of the gas generator to pass through is circular in shape. Thus, for a circular cross-section gas generator, the clearance between the inner rim of the insertion opening and the outer periphery of the gas generator can be further prevented. As a result, the airtightness of the airbag can be further improved.

According to another preferred embodiment, the insertion opening of the second invention is provided for allowing the end of the gas generator connected to the gas-generator ignition control cable to pass through.

Thus, the end of the gas generator connected to the gas-generator ignition control cable is passed through the insertion opening of the airbag with the gas generator housed in the airbag, and the end can be exposed to the exterior of the airbag and connected to the ignition control cable.

According to yet another preferred embodiment, the periphery of the insertion opening is sewn up in a circle.

Thus, the periphery (inner rim) of the circular insertion opening can be reinforced.

In order to achieve the above object, a second aspect of the invention uses the airbag system as defined above.

Thus, the airtightness of the knee airbag can be improved. This prevents gas leakage through the clearance during inflation and deployment, and thereby improving the deployment performance of the knee airbag. Furthermore, since the knee airbag can be deployed by a relatively low-output gas generator, the gas generator can be made compact.

### [Advantages of the Invention]

According to the invention, the deployment performance of an airbag can be improved by improvement in airtightness.

### [Brief Description of the Drawings]

Fig. 1 is a sectional view of the vicinity in front of a vehicle seat showing the inflating state of a knee airbag of a leg airbag system according to an embodiment of the present invention.
Fig. 2 is a front view (plan view) of the knee airbag of the leg airbag system according to the embodiment, viewed from the interior panel.
Fig. 3 is a sectional view taken along line III-III of Fig. 2.
Fig. 4 is a cross-sectional view taken along line IV-IV of Fig. 3.
Fig. 5 is a front view of the knee airbag in a state in which a gas generator is housed in a gas-generator housing portion.
Fig. 6 is a diagram of the gas-generator insertion opening in Fig. 5, viewed from arrow A.
Fig. 7 is a conceptual diagram of a state in which the end of the gas generator adjacent to a connector passes through the insertion opening, wherein Fig. 7(a) is a conceptual diagram of the insertion state of the embodiment, and Fig. 7(b) is a conceptual diagram of the insertion state of the comparative example.

### [Best Mode for Carrying Out the Invention]

An embodiment of the present invention will be described hereinbelow with reference to the drawings. The embodiment is an example of application of the invention to a leg airbag system including an airbag (hereinafter, referred to as a knee airbag) that inflates forward of occupants' legs in a collision.

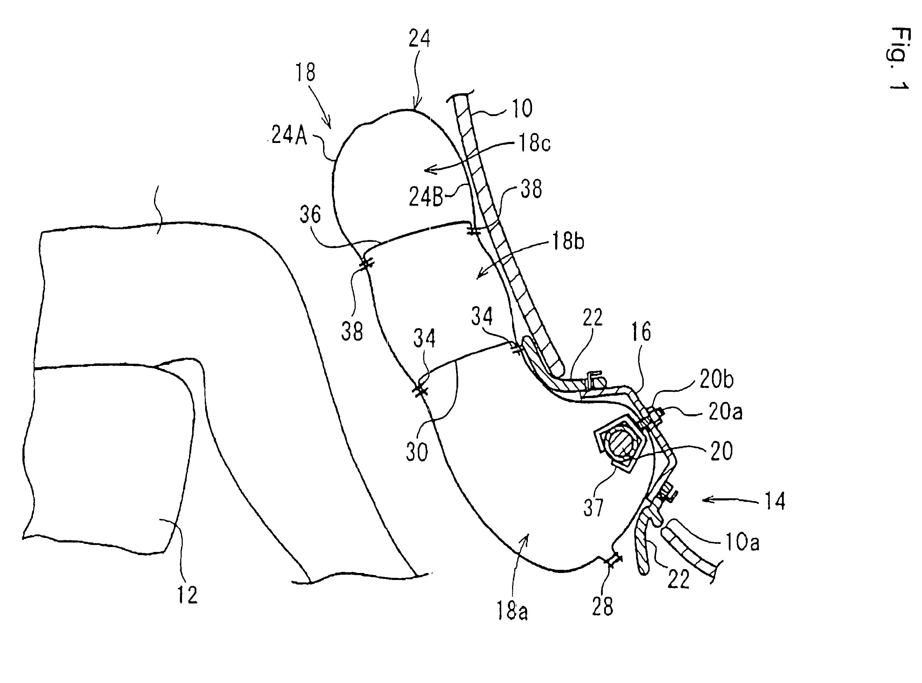

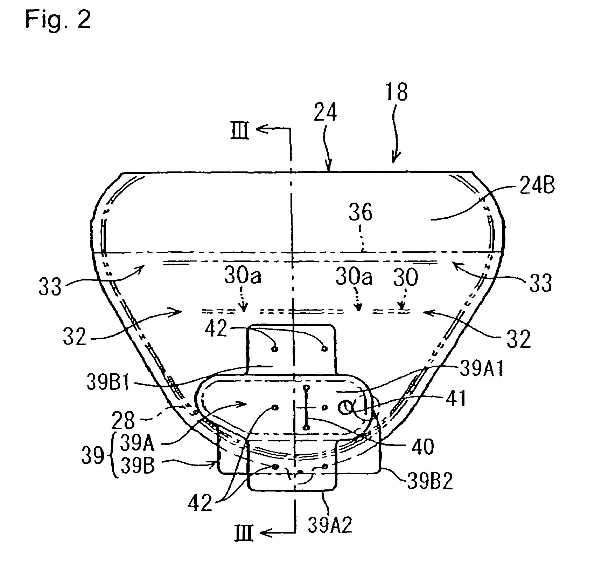

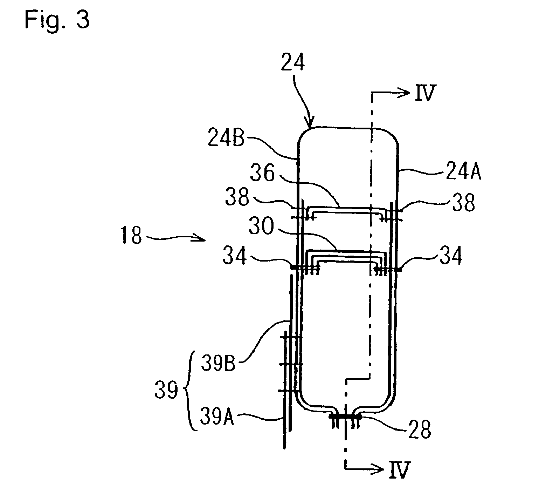

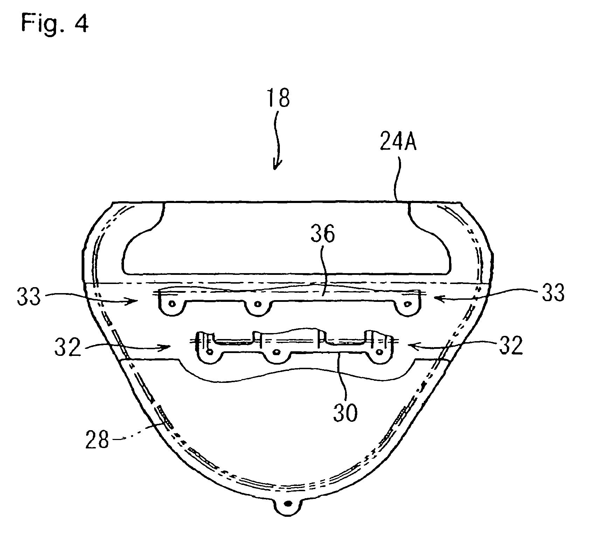

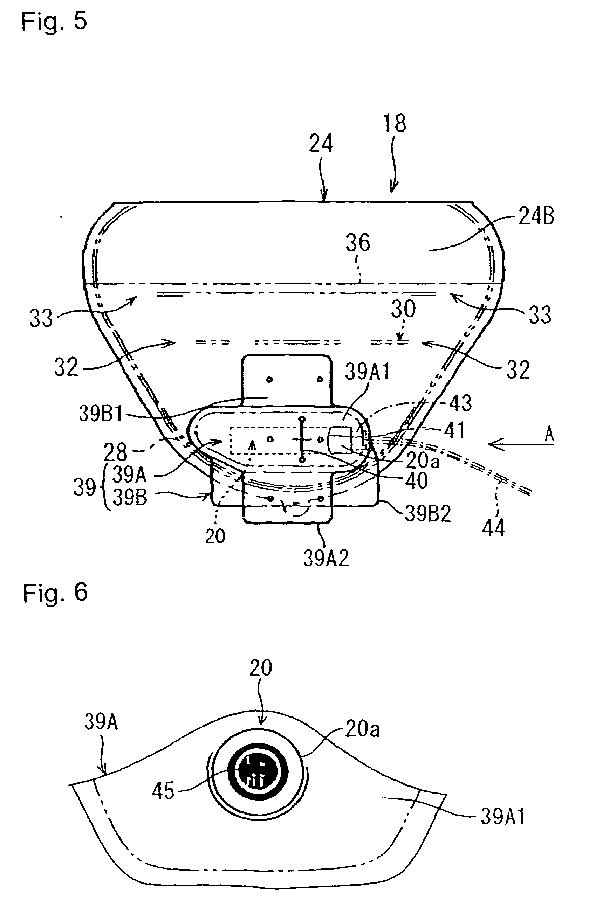

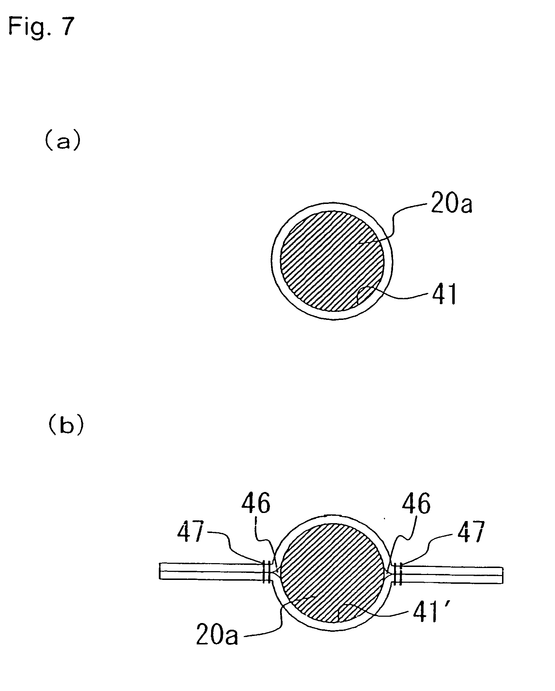

Fig. 1 is a sectional view of the vicinity in front of a vehicle seat, showing the inflating state of a knee airbag of a leg airbag system according to an embodiment of the present invention; Fig. 2 is a front view (plan view) of the knee airbag viewed from an interior panel; Fig. 3 is a sectional view taken along line III-III of Fig. 2; Fig. 4 is a cross-sectional views taken along line IV-IV of Fig. 3; Fig. 5 is a front view of the knee airbag in a state in which a gas generator is housed in a gas-generator housing section; Fig. 6 is a diagram of the gas-generator insertion opening in Fig. 5, viewed from arrow A; and Fig. 7 is a conceptual diagram of a state in which the end of the gas generator adjacent to a connector passes through the insertion opening.

A leg airbag system 14 is mounted to an interior panel 10 serving as an interior trim member in front of a seat 12.

The leg airbag system 14 (an airbag system) includes a container-like retainer 16, a knee airbag 18 (airbag) connected to the interior of the retainer 16, and a gas generator 20 for inflating the knee airbag 18. The retainer 16 is disposed in an opening 10a of the interior panel 10. The knee airbag 18 is usually accommodated in a folded state in the retainer 16. A lid 22 is mounted to the front surface of the retainer 16 such that it covers the knee airbag 18. The lid 22 is usually disposed substantially inside the interior panel 10; when the knee airbag 18 inflates, the lid 22 is open to the front face of the interior panel 10 with the upper and lower ends as fulcrum.

In the embodiment, the opening 10a is provided at a height equal to or lower than the seating face of the seat 12. The knee airbag 18 inflates from below upward along the front surface of the interior panel 10 (the surface adjacent to the occupant) through the opening 10a during inflation.

The outer shell of the knee airbag 18 is constructed of one panel 24 having an occupant-side front panel 24A and a rear panel 24B adjacent to the interior panel 10. Referring to Fig. 2, in this embodiment, the panel 24 is constructed such that the front panel 24A and the rear panel 24B substantially triangular in shape and of the same size are connected together. The panel 24 is folded back at the joint portion, and the respective rims of the front panel 24A and the rear panel 24B except the joint portion are joined together with connecting means such as sewing to be formed into a bag. Reference numeral 28 indicates a seam of sewing thread or the like that stitches up the rims. One surface of the front panel 24A and the rear panel 24B is coated with silicone, which comes inside in the form of a bag.

The knee airbag 18 has two belt-like tethers 30 and 36 sewn therein for preventing an increase in the thickness of the airbag 18 during inflation and deployment. The first tether 30 is disposed upstream of the gas flow from the gas generator 20 (below in Figs. 1 to 4), whose crosswise opposite ends and the facing inner surfaces of the knee airbag 18 are stitched up with a sewing thread 34. The second tether 36 is disposed downstream of the gas flow (above in Figs. 1 to 4), whose crosswise opposite ends and the facing inner surfaces of the knee airbag 18 are also stitched up with the sewing thread 38. As shown in Figs. 2 and 4, the first tether 30 and the second tether 36 are disposed substantially in the lateral direction (in the vehicle width direction) of the knee airbag 18 to form a first chamber 18a, a second chamber 18b, and a third chamber 18c in the knee airbag 18 in that order from the upper stream of the gas flow (see Fig. 1). Channels 32 and 33 for the gas from the gas generator 20 to pass through are disposed on the opposite ends of the length direction of the first tether 30 and the second tether 36, respectively. The channel 32 communicates the first chamber 18a and the second chamber 18b with each other, while the channel 33 communicates the second chamber 18b and the third chamber 18c with each other. The first tether 30 has at least one (two in this embodiment) channel 30a for the gas from the gas generator 20 to pass through.

The knee airbag 18 has a gas-generator housing section 39 at the lower part. The gas-generator housing section 39 has a housing bag 39A for housing the gas generator 20 and a protective fabric 39B disposed between the housing bag 39A and the rear panel 24B, and is sewn to the knee airbag 18. The housing bag 39A communicates with the knee airbag 18, and has a housing section 39A1 for housing the gas generator 20 and a cover 39A2 integrated with the housing section 39A1 to improve the airtightness of the housing section 39A1 (in other words, to improve the airtightness of the knee airbag 18). The cover 39A2 is disposed on one side of a slit 40, to be described later, (below in Fig. 2), which is folded back from the one side toward the slit 40 (upward in Fig. 2) to cover the slit 40 from the one side.

The housing section 39A1 has the slit 40 (second insertion opening) for the gas generator 20 to take in and out therethrough and an insertion opening 41 for an end 20a of the gas generator 20 adjacent to a connector (see Figs. 5 and 6) to expose to the exterior after being housed. The gas-generator end 20a exposed to the exterior through the insertion opening 41 has a connector joint portion 45 (see Fig. 6), to which a cable 44 for controlling the ignition of the gas generator 20 is connected via the connector 43 (see Figs. 5 and 6).

The insertion opening 41 is circular in shape, whose opening area is set smaller than the cross section of the end 20a of the gas generator 20 (a cross section perpendicular to the axis of the gas generator 20). The opening area here denotes the area of the insertion opening 41 in a flatly developed state; in other words, the diameter of the insertion opening 41 is set smaller than that of the gas-generator end 20a. In this embodiment, supposing that the diameter of the gas-generator end 20a is 25 mm, the diameter of the insertion opening 41 is set to about 22 mm. Thus, as shown in Figs. 5 and 6, when the gas-generator end 20a is passed through the insertion opening 41, the gas generator 20 is tightly fitted in the housing section 39A1 of the housing bag 39A to prevent the formation of clearance between the inner rim of the insertion opening 41 and the outer periphery of the gas-generator end 20a. The gas-generator end 20a is inserted into the insertion opening 41 by using the flexibility of the fabric of the housing bag 39A. Although not particularly made in this embodiment, the periphery (inner rim) of the circular insertion opening 41 may be stitched for reinforcement.

The protective fabric 39B has a cover 39B 1 for improving the airtightness of the knee airbag 18 to improve the airtightness of the knee airbag 18, like the cover 39A2 of the housing bag 39A, and a protective portion 39B2 provided integrally with the cover 39B1 for protecting the knee airbag 18 from the corner (edge) of the retainer 16 at inflation. The cover 39B1 is disposed on the other side of the slit 40 (above in Fig. 2), which is folded back from the other side toward the slit 40 (downward in Fig. 2) to cover the slit 40 from the other side.

In accommodating the gas generator 20 in this gas-generator housing section 39, the gas generator 20 is first accommodated in the housing section 39A1 of the housing bag 39A through the slit 40, then the cover 39B1 of the protective fabric 39B is folded back toward the slit 40 so as to cover the slit 40, and then the cover 39A2 of the housing bag 39A is folded back to the slit 40 so as to further cover the cover 39B1 that covers the slit 40. Thus, the slit 40 is covered double with the covers 39B1 and 39A2 in layers to improve the airtightness of the knee airbag 18. The gas-generator housing section 39 is not shown in Fig. 1.

The gas generator 20 is substantially cylindrical in shape, and is housed in the housing section 39A1 of the housing bag 39A with the cylindrical axis direction substantially in the vehicle width direction in a state in which it is retained by a metallic gas-generator retaining member 37 (see Fig. 1) (see Fig. 5, the gas-generator retaining member 37 is not shown in Fig. 5). The gas generator 20 generates a jet of gas due to the reaction of a gas-generating agent by using the heat of ignited powder. The ignition is controlled by a control unit (not shown) connected to the gas generator 20 via the connector 43 and the cable 44 (see Fig. 5). As shown in Fig. 1, stud bolts 20a project from the side circumferential surface of the gas-generator retaining member 37 that retains the gas generator 20. The stud bolts 20a are passed through bolt insertion openings (openings) in the housing section 39A1 and the cover 39A2 of the housing bag 39A and the cover 39B1 of the protective fabric 39B and a bolt insertion opening (not shown) in the bottom of the retainer 16, on which nuts 20b are tightened to fix the gas generator 20 and the gas-generator retaining member 37 to the retainer 16. The rear panel 24B of the knee airbag 18 is retained to the retainer 16 in such a manner as to be clamped between the gas generator 20 and the gas-generator retaining member 37 and the bottom of the retainer 16.

Although not particularly described, the first tether 30, the second tether 36, and the gas-generator housing section 39 are made of the same material as that of the knee airbag 18 (or the panel 24).

The leg airbag system 14 with this arrangement activates the gas generator 20 in a vehicle collision to generate knee-airbag inflating gas. The gas is supplied into the first chamber 18a to inflate it first. At that time, the inflation of the first chamber 18a allows the lid 22 to open to both sides. Then, the gas in the first chamber 18a flows into the second chamber 18b through the channels 30a of the first tether 30 and the channels 32 to inflate the second chamber 18b. The gas in the second chamber 18b then flows into the third chamber 18c through the channels 33 to inflate the third chamber 18c. Thus, the knee airbag 18 is inflated and deployed.

The leg airbag system 14 of the embodiment with this arrangement and operation has the following advantages.

In the leg airbag system 14 of the embodiment, the end 20a of the gas generator 20 connected to the gas-generator ignition control cable 44 is passed through the insertion opening 41 of the knee airbag 18, with the gas generator 20 housed in the knee airbag 18, and the end 20a is exposed to the exterior of the knee airbag 18. In this embodiment, the insertion opening 41 for the gas-generator end 20a is circular in shape, whose opening area is set smaller than the cross section of the gas-generator end 20a. Thus, the substantially cylindrical gas-generator end 20a is tightly fitted in the housing section 39A1 of the housing bag 39A to prevent the formation of clearance between the inner rim of the insertion opening 41 and the outer periphery of the gas-generator end 20a. Thus, the airtightness of the knee airbag 18 can be improved. This prevents gas leakage through the clearance during inflation and deployment, and thereby improving the deployment performance of the knee airbag 18. Furthermore, since the knee airbag 18 can be deployed by the relatively low-output gas generator 20, the gas generator 20 can be made compact.

The invention provides the advantages of improving assembly performance and productivity in addition to the improvement in airtightness. The advantages will be described below with reference to the comparative example in which the insertion opening 41 is in the form of slit.

Fig. 7 is a conceptual diagram of a state in which the end 20a of the gas generator 20 adjacent to the connector passes through the insertion opening, wherein Fig. 7(a) is a conceptual diagram of the insertion state of the embodiment, and Fig. 7(b) is a conceptual diagram of the insertion state of the comparative example.

As shown in Fig. 7(a), in this embodiment, the insertion opening 41 is circular in shape, whose the opening area is set smaller than one of the cross section of the gas-generator end 20a. This prevents the formation of clearance between the inner rim of the insertion opening 41 and the outer periphery of the gas-generator end 20a in an inserted state. In contrast, as shown in Fig. 7(b), with an insertion opening 41' in the form of slit, clearances 46 may be formed on both ends of the gas-generator end 20a in an inserted state. Thus, the embodiment provides higher airtightness than the comparative example.

In the comparative example shown in Fig. 7(b), when the gas generator 20 is mounted to the knee airbag 18 (in other words, the end 20a of the gas generator 20 housed in the housing section 39A1 of the housing bag 39A is exposed to the exterior through the insertion opening 41'), the end 20a must be passed through the slit-like insertion opening 41' after being expanded to open. In contrast, since the embodiment has the circular insertion opening 41, the time and labor to expand and open the slit at insertion can be omitted. Thus, the embodiment provides higher assembly performance than the comparative example.

In the comparative example of Fig. 7(b), since the insertion opening 41' has the form of slit, the construction can be thought as an example such that the both ends is sewn up to decrease the clearance after the gas generator 20 is passed therethrough in order to improve the airtightness to a maximum extent, as shown in the drawing. Numeral 47 in Fig. 7(b) indicates the seam. In contrast, the insertion opening 41 of the embodiment is circular in shape and is small in opening area. Thus, there is no need for sewing after the insertion of the gas-generator end 20a. This eliminates the need for the process of sewing at the mounting of the gas generator 20, thereby improving the productivity of the airbag system, and decreasing the cost.

The leg airbag system 14 of the embodiment has the slit 40 for the gas generator 20 to put in and out from the housing bag 39A, in addition to the insertion opening 41 for the end 20a of the gas generator 20 adjacent to the connector to expose to the exterior. Thus, the gas generator 20 can easily be housed in the housing section 39A1 through the slit 40.

The leg airbag system 14 of the embodiment has the slit 40 as an insertion opening for the gas generator 20 to put in and out from the housing bag 39A, as has been described. The slit-shaped insertion opening can be expanded at the insertion of the gas generator 20 to provide sufficient opening to pass the gas generator 20 therethrough. The slit 40 can be closed after the insertion to minimize the opening space, thereby preventing a decrease in the airtightness of the knee airbag 18.

While the invention has been described with the airbag 18 containing two tethers as an example, the invention is not limited to that. The invention may be applied to an airbag having more tethers and an airbag having no tether. This also offers the same advantages.

The invention has been described using the example of application to an airbag system using the gas generator 20 that generates high-temperature gas using powder. The invention is not limited to that, but may be applied to an airbag system using a gas generator that generates high-pressure gas such as argon. This also offers the same advantages.

The invention has been described using the example of application to a leg airbag system in which an airbag inflates forward of occupants' legs in a collision. The invention is not limited to that, but may be applied to various airbag systems for restraining occupants' bodies in a car collision, such as a driver airbag system that inflates and deploys from the rotation center of the steering wheel toward a driver in a driver seat and a passenger airbag that inflates and deploys from an instrument panel toward the passenger seat.

## Claims

1. An airbag system (14) including an airbag (18) for restraining an occupant and a gas generator (20) that generates a jet of gas to inflate the airbag (18), wherein the airbag (18) comprises in a fabric of the airbag (18) an insertion opening (41) for the gas generator (20) to pass through, **characterized in that** the area of the insertion opening (41) is smaller than the cross section of an end (20a) of the gas generator (20), the end (20a) of the gas generator (20) being inserted into the insertion opening (41) by using the flexibility of the fabric of the airbag (18).

2. The airbag system (14) according to Claim 1, wherein the gas-generator insertion opening (41) is circular in shape.

3. The airbag system (14) according to Claim 1 or Claim 2, wherein the insertion opening (41) is provided for allowing the end (20a) of the gas generator (20) connected to the gas-generator ignition control cable (44) to pass through.

4. The airbag system (14) according to one of Claims 1 to 3, wherein the periphery of the insertion opening (41) is sewn up in a circle.

5. A knee airbag system (14) using the airbag system (14) according to one of Claims 1 to 4.

## Patentansprüche

1. Airbagsystem (14), welches einen Airbag (18) zum Zurückhalten eines Insassen und einen Gasgenerator (20), welcher einen Gasstrahl erzeugt, um den Airbag (18) aufzublasen, aufweist, wobei der Airbag (18) in einem Gewebe des Airbags (18) eine Einsetzöffnung (41) umfasst, damit der Gasgenerator (20) dadurch verläuft, **dadurch gekennzeichnet, dass** die Fläche der Einsetzöffnung (41) kleiner als der Querschnitt eines Endes (20a) des Gasgenerators (20) ist, wobei das Ende (20a) des Gasgenerators (20) unter Verwendung der Flexibilität des Gewebes des Airbags (18) in die Einsetzöffnung (41) eingesetzt wird.

2. Airbagsystem (14) nach Anspruch 1, wobei die Gasgeneratoreinsetzöffnung (41) eine kreisförmige Form aufweist.

3. Airbagsystem (14) nach Anspruch 1 oder Anspruch 2, wobei die Einsetzöffnung (41) ausgestaltet ist, dem Ende (20a) des Gasgenerators (20), welches mit dem Gasgeneratorzündsteuerkabel (44) verbunden ist, dadurch zu verlaufen.

4. Airbagsystem (14) nach einem der Ansprüche 1-3, wobei der Umfang der Einsetzöffnung (41) in einem Kreis vernäht ist.

5. Knieairbagsystem (14), welches das Airbagsystem (14) nach einem der Ansprüche 1-4 verwendet.

## Revendications

1. Système de coussin de sécurité gonflable (14), comprenant un sac de sécurité gonflable (18) pour retenir un occupant et un générateur à gaz (20), générant un jet de gaz, de manière à gonfler le sac de sécurité gonflable (18), dans lequel le sac de sécurité gonflable (18) est composé d'un tissu du sac de sécurité gonflable (18), d'une ouverture d'insertion (41), pour que le générateur à gaz (20) passe à travers elle, **caractérisé en ce que** la zone de l'ouverture d'insertion (41) est plus petite que la section transversale d'une extrémité (20a) du générateur à gaz (20), l'extrémité (20a) du générateur à gaz (20) étant insérée dans l'ouverture d'insertion (41) en utilisant la flexibilité du tissu du sac de sécurité gonflable (18).

2. Système de coussin de sécurité gonflable (14) selon la revendication 1, dans lequel l'ouverture d'insertion (41) pour le générateur à gaz est de forme circulaire.

3. Système de coussin de sécurité gonflable (14) selon la revendication 1 ou la revendication 2, dans lequel l'ouverture d'insertion (41) est prévue pour permettre que l'extrémité (20a) du générateur à gaz (20), connectée au câble de commande d'allumage de générateur à gaz (44), passe à travers elle.

4. Système de coussin de sécurité gonflable (14) selon l'une des revendications 1 à 3, dans lequel la périphérie de l'ouverture d'insertion (41) est cousue en un cercle.

5. Système de coussin de sécurité gonflable pour les genoux (14), utilisant le système de coussin de sécurité gonflable (14) selon l'une des revendications 1 à 4.
